(19) Europäisches Patentamt
European Patent Office
Office européen des brevets

(11) **EP 2 771 724 B1**

(12) **FASCICULE DE BREVET EUROPEEN**

(45) Date de publication et mention de la délivrance du brevet:
**27.02.2019 Bulletin 2019/09**

(51) Int Cl.:
**G02B 5/18** (2006.01)     **G02B 5/00** (2006.01)
**B42D 15/00** (2006.01)

(21) Numéro de dépôt: **12788458.3**

(22) Date de dépôt: **26.10.2012**

(86) Numéro de dépôt international:
**PCT/EP2012/071210**

(87) Numéro de publication internationale:
**WO 2013/060817 (02.05.2013 Gazette 2013/18)**

(54) **COMPOSANT OPTIQUE DE SECURITE A EFFET REFLECTIF, FABRICATION D'UN TEL COMPOSANT ET DOCUMENT SECURISÉ EQUIPÉ D'UN TEL COMPOSANT**

OPTISCHES SICHERHEITSKOMPONENTE MIT REFLEKTIERENDER WIRKUNG, HERSTELLUNG DIESER KOMPONENTE UND GESICHERTES DOKUMENT MIT EINER SOLCHEN KOMPONENTE

OPTICAL SECURITY COMPONENT HAVING A REFLECTIVE EFFECT, MANUFACTURE OF SAID COMPONENT, AND SECURED DOCUMENT PROVIDED WITH SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2011 FR 1159796**

(43) Date de publication de la demande:
**03.09.2014 Bulletin 2014/36**

(73) Titulaire: **SURYS**
**77607 Marne la Vallee Cedex 3 (FR)**

(72) Inventeurs:
• **SAUVAGE-VINCENT, Jean**
  **94100 Saint Maur Les Fosses (FR)**
• **PETITON, Valery**
  **77440 Vendrest (FR)**

(74) Mandataire: **Osha Liang**
**2, rue de la Paix**
**75002 Paris (FR)**

(56) Documents cités:
**EP-A1- 2 128 665       WO-A1-01/44839**
**WO-A1-2012/136777    DE-A1-102007 016 394**
**DE-A1-102007 061 979  GB-A- 2 427 022**
**US-A1- 2007 200 940    US-A1- 2012 314 188**
**US-B2- 7 145 723**

• **TOMPKIN W R ET AL: "Zero-order gratings for optically variable devices", PROCEEDINGS OF SPIE, SPIE, US, vol. 4677, 1 avril 2002 (2002-04-01), pages 227-237, XP002302559, ISSN: 0277-786X cité dans la demande**
• **YONGJUN LIM ET AL: "Wavelength-Band Selection Filter Based on Surface Plasmon Resonance and Phase Conjugation Holography", IEEE PHOTONICS TECHNOLOGY LETTERS, IEEE SERVICE CENTER, PISCATAWAY, NJ, US, vol. 18, no. 23, 1 décembre 2006 (2006-12-01), pages 2532-2534, XP011151979, ISSN: 1041-1135, DOI: 10.1109/LPT.2006.887208**
• **E. POPOV ET AL: "Total absorption of unpolarized light by crossed gratings", OPTICS EXPRESS, vol. 16, no. 9, 28 avril 2008 (2008-04-28) , page 6146, XP055026907, ISSN: 1094-4087, DOI: 10.1364/OE.16.006146**
• **G. Hass ET AL: "Optical Constants and Reflectance and Transmittance of Evaporated Aluminum in the Visible and Ultraviolet", Journal of the Optical Society of America, vol. 51, no. 7, 1 July 1961 (1961-07-01), page 719, XP055036880, ISSN: 0030-3941, DOI: 10.1364/JOSA.51.000719**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## DOMAINE DE L'INVENTION

La présente invention concerne le domaine du marquage de sécurité. Plus particulièrement, elle se rapporte à un composant optique de sécurité à effet réflectif pour vérifier l'authenticité d'un document, à un procédé de fabrication d'un tel composant et à un document sécurisé équipé d'un tel document.

## ETAT DE L'ART

On connaît de nombreuses technologies pour l'authentification de documents ou de produits, et notamment pour la sécurisation de documents tels que des documents de valeur de type billets de banque, des passeports ou autres documents d'identification. Ces technologies visent à la production de composants optiques de sécurité dont les effets optiques en fonction des paramètres d'observation (orientation par rapport à l'axe d'observation, position et dimensions de la source lumineuse, etc.) prennent des configurations très caractéristiques et vérifiables. Le but général de ces composants optiques est de fournir des effets nouveaux et différenciés, à partir de configurations physiques difficilement reproductibles.

Parmi ces composants, on appelle DOVID pour "Diffractive Optical Variable Image Device", les composants optiques produisant des images diffractives et variables que l'on appelle communément les hologrammes. Ces composants sont généralement observés en réflexion. Parmi ces composants, certains présentent des effets optiques observables à l'ordre zéro, c'est-à-dire en réflexion directe, permettant une authentification plus simple par un public non initié à l'optique des réseaux.

Parmi les composants optiques observables en réflexion directe, on connaît par exemple un composant optique de sécurité comprenant une couche à haut indice encapsulée entre deux couches à indice plus faible, et structurée pour former un réseau sub-longueur d'onde. Un tel composant, appelé DID selon l'abréviation de l'expression anglo-saxonne « Diffractive Identification Device » est par exemple décrit dans la demande FR 2 509 873. Il se comporte comme un guide d'onde structuré permettant d'exciter des résonnances de modes guidés à des longueurs d'onde différentes en fonction de la polarisation. En réflexion, un tel composant se comporte ainsi comme un filtre passe bande, formant un miroir coloré dont la couleur varie avec la direction d'observation.

L'article « Zero-order Gratings for Optically Variable Devices » de W.R. Thompkin et al. (Proceedings of SPIE Vol. 4677 (2002)) décrit également des composants optiques de sécurité de type DID présentant des réseaux de période sub-longueur d'onde observables à l'ordre zéro. Les réseaux décrits sont à une ou deux dimensions, soit uniformes, soit à pas variable pour créer des effets optiques supplémentaires. L'article décrit également des composants combinant des réseaux observables à l'ordre zéro avec des réseaux présentant des périodes plus larges pour permettre des propriétés de diffraction nouvelles et montre l'influence de la polarisation de l'onde incidente dans de telles structures combinées, permettant notamment des effets optiques variable avec une rotation azimutale du composant.

Le document DE 10 2007 061979 décrit un élément de sécurité pour documents sécurisés mettant en oeuvre des nanostructures métalliques. Notamment, en procédant à une pulvérisation sous flux oblique d'un métal sur une couche en matériau diélectrique structurée, il est expliqué comment la réflexion et la transmission des éléments de sécurité peuvent varier en longueur d'onde en fonction de l'angle de pulvérisation du métal.

Le document US 7 145 723 B2 divulgue un élément de sécurité comprenant une couche métallique et une couche diélectrique formant une interface métal-diélectrique, structurée avec un profil sinusoïdal.

La présente invention présente un composant optique de sécurité pouvant être contrôlé en réflexion à l'ordre zéro et à l'oeil nu par un observateur, ledit composant mettant en oeuvre des résonances plasmoniques afin de présenter des effets optiques remarquables pour permettre à un utilisateur non initié un contrôle d'authentification avec un maximum de confort et une très grande fiabilité.

## RESUME DE L'INVENTION

Selon un premier aspect, l'invention concerne un composant optique de sécurité destiné à être observé dans une bande spectrale comprise entre 380 et 780 nm et en réflexion directe, comprenant :

- une couche en matériau diélectrique, transparente dans ladite bande spectrale d'observation,
- une couche métallique continue formant avec ladite couche en matériau diélectrique une interface métal - diélectrique, présentant une épaisseur suffisante pour permettre la réflexion de la lumière incidente sur ladite interface dans la bande spectrale d'observation avec une transmission résiduelle maximale en fonction de la longueur d'onde de 2%, et structurée au niveau de ladite interface pour former, dans une première zone de couplage, deux ensembles d'ondulations s'étendant selon deux directions et formant un premier réseau de couplage à deux dimensions, de périodes sub-longueur d'onde selon chacune des directions.

La déposante a mis en évidence dans un composant ainsi réalisé des effets de variation de couleur originaux et contrastés, soit par rotation azimutale du composant, soit par translation axiale du composant. Ces effets remarquables peuvent s'expliquer par des effets de résonance plasmonique à l'interface métal-diélectrique, qui permettent la réalisation d'un filtre en réflexion coupe bande, variable en fonction des conditions d'observations, et présentant une bonne tolérance en fonction de l'angle d'incidence.

Le réseau à deux dimensions ainsi formé peut être défini par la superposition de deux ensembles d'ondulations périodiques s'étendant selon deux directions. On peut alors définir pour chaque ensemble d'ondulations un vecteur réseau, de direction perpendiculaire aux ondulations et de norme inversement proportionnelle à la période.

Avantageusement, le profil du réseau selon une dimension est sinusoïdal, ou plus généralement à variation continue, ce type de profil permettant notamment une meilleure propagation des modes plasmoniques.

Avantageusement, les directions des vecteurs réseaux sont perpendiculaires à $\pm$ 3°, permettant de créer un effet coloré contrasté, visible selon deux orientations azimutales perpendiculaires l'une à l'autre.

Selon une variante, les normes des vecteurs réseaux sont identiques, permettant de créer un effet coloré stable en rotation. Alternativement, les normes des vecteurs réseaux, et donc les périodes, sont différentes, permettant de créer un effet coloré variable par rotation azimutale.

Selon une variante, la couche métallique est structurée pour former dans une première zone de couplage un premier réseau à deux dimensions et dans une deuxième zone de couplage, un deuxième réseau à deux dimensions. Une telle structuration permet de créer des motifs colorés sur fonds colorés variables, rendant plus facile l'authentification.

Avantageusement, lesdites zones forment des motifs complémentaires, par exemple une forme reconnaissable, pour faciliter encore l'authentification.

Avantageusement, chacun des deux réseaux présente des vecteurs réseaux dont les directions sont perpendiculaires, et les directions des vecteurs réseaux du premier réseau sont parallèles aux directions des vecteurs réseaux du second réseau. Un tel agencement permet un contraste maximal de l'effet coloré par rotation azimutale de 90° du composant.

Selon une première variante, la période selon une direction d'un premier réseau est identique à la période selon l'autre direction du deuxième réseau. Cette configuration permet de générer des inversions de couleur entre le motif et le fond.

Selon une seconde variante, les périodes selon la première et la seconde direction du premier réseau sont identiques et la période selon une direction du deuxième réseau est identique à ladite période du premier réseau. Cette configuration permet par exemple de garder un fond coloré stable en rotation et de présenter un motif dont la couleur ne diffère de celle du fond que dans une position azimutale donnée.

Avantageusement, les périodes du ou desdits réseaux sont comprises entre 200 nm et 550 nm.

Avantageusement, la profondeur du réseau est proportionnelle à un ratio de la période du réseau de 10 à 50% et préférentiellement de 10% à 40%.

Avantageusement, une partie au moins de la couche métallique est formée en aluminium et son épaisseur est égale ou supérieure à 30 nm.

Selon une variante, la couche métallique comprend au moins deux parties formées chacune d'un métal différent. Cette configuration permet de modifier les effets colorés, la nature du métal jouant sur les résonances plasmoniques.

Avantageusement, le composant optique de sécurité comprend en outre une couche de fermeture en contact avec ladite couche métallique sur sa face opposée audit interface métal - diélectrique, par exemple une couche d'adhésion destinée à l'adhésion dudit composant avec un substrat.

Selon un deuxième aspect, l'invention concerne un élément optique de sécurité destiné à la sécurisation d'un document et comprenant au moins un composant optique de sécurité selon le premier aspect.

Selon une variante, ledit élément optique comprend en outre des zones non métallisées. Ces zones non métallisées pourront permettre notamment de mieux mettre en évidence les effets du ou des composant(s) selon le premier aspect.

Selon un troisième aspect, l'invention concerne un document ou un objet sécurisé comprenant un substrat et un élément optique de sécurité selon le deuxième aspect fixé sur ledit substrat.

Selon un quatrième aspect, l'invention concerne une méthode de fabrication d'un composant optique de sécurité destiné à être observé dans une bande spectrale comprise entre 380 et 780 nm et en réflexion directe, ladite méthode comprenant :

- la provision d'une couche en matériau diélectrique, transparente dans ladite bande spectrale d'observation et la structuration de ladite couche en matériau diélectrique pour former, dans une première zone de couplage, deux ensembles d'ondulations s'étendant selon deux directions et formant un premier réseau à deux dimensions, de périodes sub-longueur d'onde selon chacune des directions,

- le dépôt d'une couche métallique continue sur ladite couche en matériau diélectrique pour former avec ladite couche en matériau diélectrique une interface métal - diélectrique structurée, ladite couche métallique présentant une épaisseur suffisante pour permettre la réflexion de la lumière incidente sur ladite interface dans la bande spectrale d'observation avec une transmission maximale résiduelle en fonction de la longueur d'onde de 2%.

Cette méthode présente notamment l'avantage d'être compatible avec les méthodes de fabrications des composants optiques de sécurité connus de l'art antérieur, notamment les composants de type DOVID.

Avantageusement, ladite couche en matériau métallique est recouverte d'une couche de fermeture sur sa face opposée à ladite interface métal - diélectrique structurée.

## BREVE DESCRIPTION DES FIGURES

D'autres caractéristiques et avantages de l'invention apparaîtront à la lecture de la description qui suit, illustrée par les figures sur lesquelles :

Les figures 1A et 1B, des vues partielles, respectivement selon un plan de coupe et de dessus, d'un composant optique de sécurité selon l'invention ;
Les figures 2A et 2B, des schémas illustrant deux modes de contrôle d'un composant optique de sécurité selon l'invention ;
Les figures 3A et 3B, des schémas illustrant un premier mode de réalisation d'un composant optique de sécurité selon l'invention et l'illustration de l'effet optique produit selon un exemple de mise en oeuvre ;
Les figures 4A et 4B, des schémas illustrant un second mode de réalisation d'un composant optique de sécurité selon l'invention et l'illustration de l'effet optique produit selon un exemple de mise en oeuvre ;
Les figures 5A et 5B, des schémas illustrant un troisième mode de réalisation d'un composant optique de sécurité selon l'invention et l'illustration de l'effet optique produit selon un exemple de mise en oeuvre ;
Les figures 6A et 6B, des schémas illustrant un quatrième mode de réalisation d'un composant optique de sécurité selon l'invention et l'illustration de l'effet optique produit selon un exemple de mise en oeuvre ;
Les figures 7A, 7B, des exemples de composants optiques de sécurité selon l'invention agencés sur un substrat d'un document ou d'un produit sécurisé.

## DESCRIPTION DETAILLEE

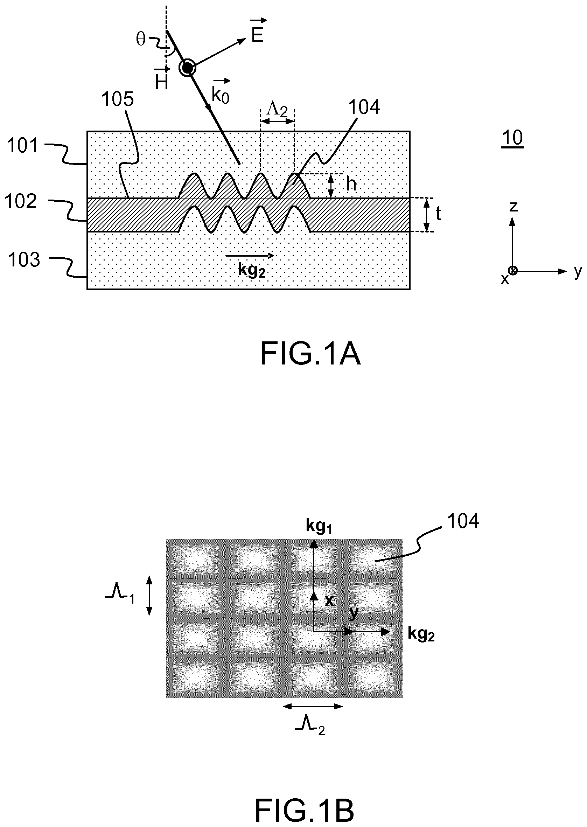

Les figures 1A et 1B représentent selon des vues partielles respectivement une vue de coupe et une vue de dessus d'un composant de sécurité 10 selon un exemple de réalisation de l'invention.

Le composant de sécurité selon l'invention comprend généralement une couche en matériau diélectrique 101 et une couche métallique continue 102 formant avec la couche en matériau diélectrique une interface diélectrique - métal 105. Le métal peut être tout métal susceptible de supporter une résonance plasmonique, et de façon préférentielle l'argent, l'aluminium, l'or, le chrome, le cuivre. L'épaisseur t de la couche métallique, sensiblement constante, est choisie suffisamment épaisse en fonction de la nature du métal pour permettre la réflexion quasi-totale de la lumière incidente dans la bande spectrale d'observation, la transmission maximale résiduelle en fonction de la longueur d'onde étant de 2%. Typiquement, l'épaisseur de la couche métallique est choisie supérieure à 30 nm pour une couche métallique en aluminium et supérieure à 90 nm pour une couche métallique en argent. L'épaisseur de la couche métallique n'est limitée que par des considérations liées à la technologie et au coût (typiquement quelques centaines de nanomètres à 1 ou 2 microns). Le composant optique de sécurité 10 peut comprendre également une couche 103 en contact avec la couche métallique sur sa face en vis-à-vis de l'interface diélectrique-métal 105. La couche 103 est par exemple une couche présentant une fonction adhésive avec un support (non représenté). Le matériau diélectrique formant la couche 101 peut être tout matériau permettant une « association non destructive » avec le métal, c'est-à-dire ne risquant pas de provoquer une réaction physico-chimique, par exemple de type oxydation, qui dégraderait l'effet à contrôler. Par matériau diélectrique, on entend généralement un matériau ou un empilement de matériaux dont la permittivité diélectrique a une partie réelle positive et une partie imaginaire nulle ou très faible devant la partie réelle. La couche en matériau diélectrique 101 peut notamment être formée d'une multicouche diélectrique, d'une multicouche métal-diélectrique ou d'une couche en matériau diélectrique comprenant des nanoparticules métalliques. Selon un exemple, la couche 101 en matériau diélectrique est une couche en matériau polymère destinée à l'embossage et la couche 103 est une couche d'encapsulation de type polymère.

Il est connu qu'à l'interface entre un matériau conducteur, par exemple un métal, et un matériau diélectrique, peut se propager une onde électromagnétique de surface associée à une oscillation collective d'électrons à la surface, appelée plasmon de surface. Ce phénomène est par exemple décrit dans l'ouvrage de base de H. Raether (« Surface plasmons », Springer-Verlag, Berlin Heidelberg). Le couplage d'une onde lumineuse incidente à un mode plasmonique peut être obtenu de différentes façons, notamment par la structuration de l'interface pour former un réseau de couplage.

Ce principe de base est mis en oeuvre dans le composant de sécurité selon l'invention pour obtenir des effets remarquables en réflexion.

Dans le composant de sécurité 10, la couche métallique 102 est structurée pour former sur au moins une partie de sa surface, appelée zone de couplage, au moins un premier réseau de couplage 104 à deux dimensions, de période sub-longueur d'onde selon chacune des directions. Un tel réseau est illustré selon une vue de dessus sur la figure 1B. Il est formé par deux ensembles d'ondulations s'étendant selon deux directions perpendiculaires pour former une structure à deux dimensions. La couche métallique est continue, déformée sur la zone de couplage de telle sorte à former ledit réseau. Le réseau est caractérisé par le pas (ou période) respectivement $\Lambda_1$, $\Lambda_2$ de chaque ensemble d'ondulations et la profondeur ou amplitude h de l'ondulation (définie comme la hauteur entre le pic et le creux). Le pas du réseau selon chacune des directions est sub-longueur d'onde, typiquement compris entre 100 nm et 600 nm, avantageusement entre 200 nm et 550 nm, déterminé pour optimiser le couplage d'une onde lumineuse incidente d'angle d'incidence donné et de longueur d'onde donnée comprise dans la bande spectrale d'observation avec un mode plasmonique se propageant à l'interface métal - diélectrique. La profondeur est comprise entre 10% et 50% du pas du réseau, avantageusement entre 10% et 40%. Le profil des ondulations est sinusoïdal ou quasi sinusoïdal, ce type de profil permettant une meilleure propagation des modes plasmoniques et étant compatible avec des méthodes de fabrication par photolithographie. Selon chaque direction, on définit un vecteur réseau $\mathbf{k_{gi}}$ de direction perpendiculaire aux traits du réseau et de norme définie par $k_{gi} = 2\pi/\Lambda_i$ où $\Lambda_i$ est le pas du réseau dans la direction considérée.

On montre qu'une telle structure présente une réponse différente en fonction de la polarisation de l'onde incidente.

On considère dans un premier temps une onde incidente de polarisation TM (onde transverse magnétique, c'est-à-dire pour laquelle le champ magnétique $\mathbf{H}$ est perpendiculaire au plan d'incidence yz qui est le plan de la figure sur la figure 1A) incidente sur le réseau avec un azimut de 0° par rapport au réseau défini par le vecteur réseau $\mathbf{k_{g2}}$ et un angle d'incidence $\theta$ dans la couche 103 par rapport à l'axe z normal au plan du réseau formé par les ondulations 104. Pour qu'il y ait couplage, c'est-à-dire transfert d'énergie entre l'onde incidente dans un milieu diélectrique de permittivité relative $\varepsilon d$ et le mode plasmonique, on montre que l'égalité suivante doit être satisfaite (voir H.Raether, précédemment cité) :

$$k_{sp} = n_1 k_0 \sin\theta + p.\, k_{g2} \qquad (1)$$

Où:

p est l'ordre diffracté évanescent

$k_0$ est le nombre d'onde défini par $k_0 = 2\pi/\lambda$

$k_{sp}$ est défini par $k_{sp} = n_{sp} k_0$, où $n_{sp}$ est l'indice effectif du plasmon, donné par

$$n_{sp} = \sqrt{\varepsilon m \varepsilon d /(\varepsilon m + \varepsilon d)} \qquad (2)$$

dans le cas d'une couche métallique d'épaisseur infinie avec $\varepsilon m$ et $\varepsilon d$ les permittivités du métal et du matériau diélectrique respectivement.

On peut définir ainsi une longueur d'onde centrale de couplage $\lambda_0$ pour une observation du composant selon un angle d'incidence $\theta_0$ standard, typiquement selon un angle de 30° qui est l'angle d'observation référencé comme étant la position typique d'une observation d'un hologramme. La longueur d'onde centrale de couplage est définie par :

$$\lambda_{02} = (\Lambda_2/p)^*(n_{sp} - n_1 * \sin(\theta_0)) \qquad (3)$$

Dans une bande spectrale centrée sur la longueur d'onde centrale de couplage, l'énergie lumineuse incidente dans le milieu diélectrique est couplée avec le mode plasmonique, entraînant l'absorption de cette énergie dans la couche métallique 102. Il en résulte une modification du spectre de l'énergie lumineuse réfléchie. Le composant optique de sécurité se comporte ainsi comme un filtre coupe bande en couleur pour une radiation incidente en mode TM.

Considérons maintenant une onde incidente avec le même angle d'incidence mais une polarisation TE (onde transverse électrique, c'est-à-dire pour laquelle le champ électrique E est perpendiculaire au plan d'incidence yz qui est le plan de la figure sur la figure X), et considérons le réseau de vecteur réseau $\mathbf{k_{g1}}$ (figures 1A, 1B), à 90° du premier réseau présenté (réseau de vecteur réseau **k**$_{g2}$). Une excitation plasmonique sera alors possible si l'onde incidente rempli les conditions de couplage tel que :

$$k_{sp} = ((k_0{*}n_1{*}\sin(\theta_0))^2 + (p{*}k_{g1})^2)^{1/2} \qquad (4)$$

On peut alors définir une nouvelle longueur d'onde centrale de couplage, indépendante de la première de par sa polarisation opposée comme :

$$\lambda_{01} = (\Lambda_1/|p|){*}(n_{sp}^2 - n_1^2{*}\sin^2\theta_0)^{1/2} \qquad (5)$$

Ainsi pour une onde incidente non polarisée, une partie du rayonnement incident sera couplée avec un mode plasmonique grâce à un ensemble d'ondulations selon une direction, et une autre partie du rayonnement sera couplée à un mode plasmonique grâce à l'ensemble des ondulations selon une autre direction, résultant dans l'absorption dans la couche métalliques de deux bandes spectrales indépendantes. A cet effet s'ajoute une perte du flux observé en réflexion directe (c'est-à-dire à l'ordre 0) due à la diffraction dans les ordres de diffraction supérieurs, entraînant en plus des variations de couleurs dues au couplage avec des modes plasmoniques, une baisse d'intensité du flux réfléchi aux longueurs d'onde diffractée.

Les différents mécanismes physiques mis en oeuvre dans le composant optique de sécurité selon l'invention permettent d'obtenir des effets colorés originaux, faciles à vérifier et tolérants en angle d'incidence, l'oeil étant mois sensible dans l'observation d'un filtre coupe bande observé en lumière naturelle au décalage spectrale de la bande spectrale absente. Des effets colorés caractéristiques jaune ou violet peuvent ainsi être obtenus.

Plusieurs modes de contrôle sont alors possibles pour un document sécurisé au moyen d'un composant optique de sécurité selon l'invention.

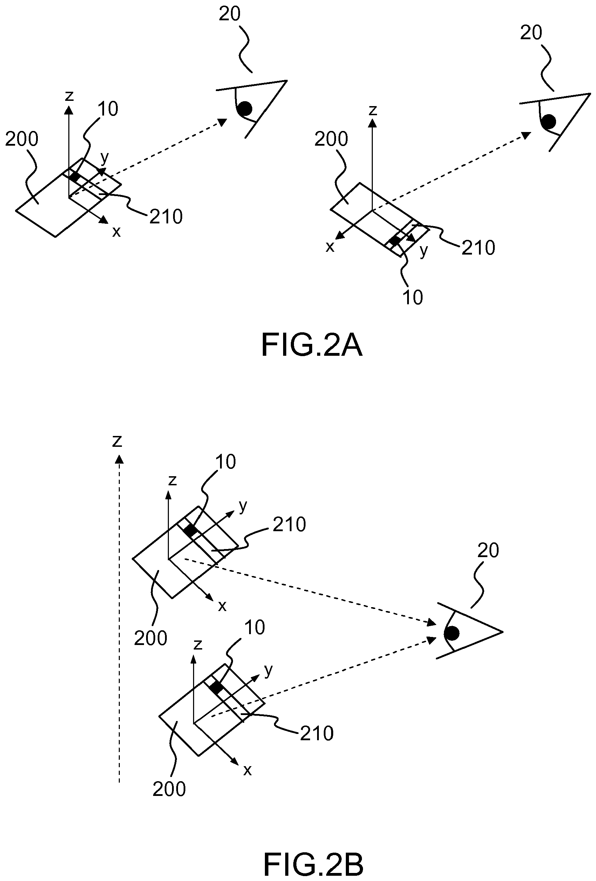

Les figures 2A et 2B illustrent deux modes de contrôle respectivement en rotation et en translation d'un document sécurisé 200, comprenant un élément de sécurité 210 avec notamment un composant optique de sécurité 10 selon l'invention.

La figure 2A illustre un premier mode de contrôle basé sur une rotation azimutale de 90° du document, entraînant une variation du spectre du rayonnement réfléchi. Par exemple, le pas du réseau selon chacune des directions pourra être différent, les longueurs d'ondes centrales de couplage (données par les équations (3) et (5)) variant selon l'une ou l'autre des directions. En conséquence, une rotation azimutale de 90° entraînera une variation des longueurs d'ondes centrales de couplage, tels que définies précédemment, pour le rayonnement en mode TM et/ou TE incident, ainsi qu'une variation des conditions de diffraction et donc de la répartition énergétique de la partie du spectre non couplée et donc une variation de la couleur observée, permettant un mode de contrôle aisé du composant optique de sécurité.

La figure 2B illustre un second mode de contrôle basé sur une translation axiale du document (translation selon l'axe z perpendiculaire au plan du réseau). La translation axiale du document entraîne une variation de l'angle d'incidence et donc de la longueur d'onde de couplage. Il s'ensuivra pour un observateur à nouveau une variation du spectre du rayonnement réfléchi.

Selon une variante, le composant optique de sécurité peut comprendre une zone dans laquelle la couche métallique n'est pas structurée. La variation de couleurs dans la zone structurée sera d'autant plus caractéristique que dans une autre zone la couleur ne varie pas.

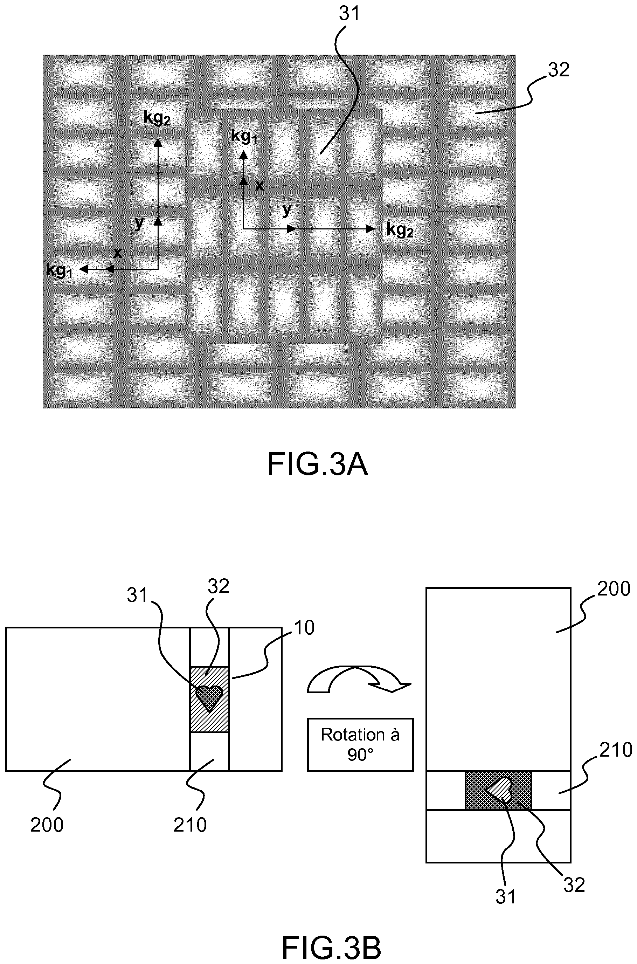

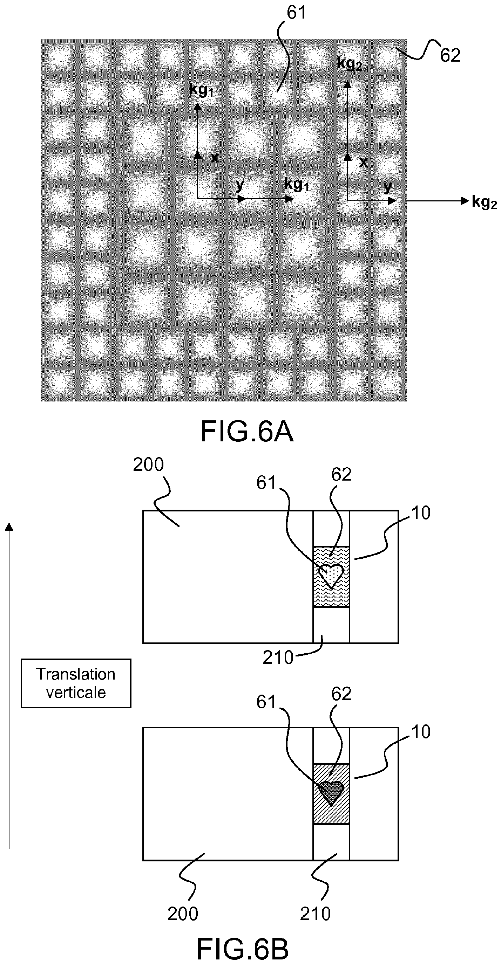

Les figures 3 à 6 illustrent des exemples de réalisation d'un composant optique de sécurité selon l'invention, adaptés préférentiellement à un contrôle basé sur une rotation azimutale du composant (figures 3 à 5) ou à un contrôle basé sur une translation axiale du composant (figure 6).

Selon ces exemples, la couche métallique du composant optique de sécurité est structurée pour former dans une première zone un premier réseau à deux dimensions et dans une deuxième zone, un deuxième réseau à deux dimensions. Avantageusement, lesdites première et deuxième zones forment des motifs complémentaires. En choisissant le pas selon chacune des directions de chacun des réseaux, il est possible de créer des effets optiques remarquables, comme cela est décrit plus en détails ci-dessous.

La figure 3A représente une vue (partielle) de dessus d'un composant optique de sécurité dans lequel la couche métallique est structurée pour former deux réseaux à deux dimensions, notés 31 et 32. Les réseaux sont caractérisés chacun par deux vecteurs réseaux **k**$_{g1}$ et **k**$_{g2}$ tels que définis précédemment, de directions perpendiculaires et de normes différentes, définissant selon chaque direction une longueur d'onde centrale de couplage. Dans cet exemple, les directions des vecteurs réseaux des deux réseaux 31 et 32 sont parallèles, les normes des vecteurs réseaux du réseau 31 selon la première et selon la seconde direction étant égales à celles des vecteurs réseaux du réseau 32 selon chacune des directions perpendiculaires. Avantageusement, comme cela est illustré sur la figure 3B, les réseaux 31 et 32 sont disposés sur des zones présentant des motifs complémentaires. Un tel composant optique de sécurité présente les effets optiques remarquables suivants, illustrés sur la figure 3B. Lorsqu'il est observé selon une première direction, correspondant à un azimut nul par rapport à un premier vecteur réseau d'un des réseaux, par exemple correspondant à un azimut nul par rapport au vecteur réseau $\mathbf{k_{g1}}$ du réseau 31, un observateur verra la zone correspondant audit premier réseau avec une couleur résultant de l'onde réfléchie après absorption dans la couche métallique d'une bande spectrale centrée sur des longueurs d'onde centrales de couplage $\lambda_{11}$, $\lambda_{12}$ déterminées à partir des pas du réseau $\Lambda_1$ dans la direction du vecteur réseau $\mathbf{k_{g1}}$, selon l'équation 3 et du pas du réseau $\Lambda_2$ dans la direction du vecteur réseau $\mathbf{k_{g2}}$, selon l'équation 4. La zone complémentaire 32 sera vue dans une couleur différente, résultant de l'onde réfléchie après absorption dans la couche métallique d'une bande spectrale centrée sur les longueurs d'onde de couplage $\lambda_{22}$, $\lambda_{21}$ déterminées respectivement à partir du pas du réseau $\Lambda_2$ de vecteur réseau $\mathbf{k_{g2}}$ selon l'équation 3 et du réseau $\Lambda_1$ de vecteur réseau $\mathbf{k_{g1}}$ selon l'équation 4. Lorsqu'une rotation azimutale de 90° du document 200 dans lequel est agencé le composant optique de sécurité 10 est effectuée (voir figure 3B), la nouvelle direction d'observation correspondra à un azimut nul par rapport au vecteur réseau $\mathbf{k_{g2}}$ du réseau 31 et par rapport au vecteur réseau $\mathbf{k_{g1}}$ du réseau 32. Il y aura donc une inversion des couleurs entre les deux zones.

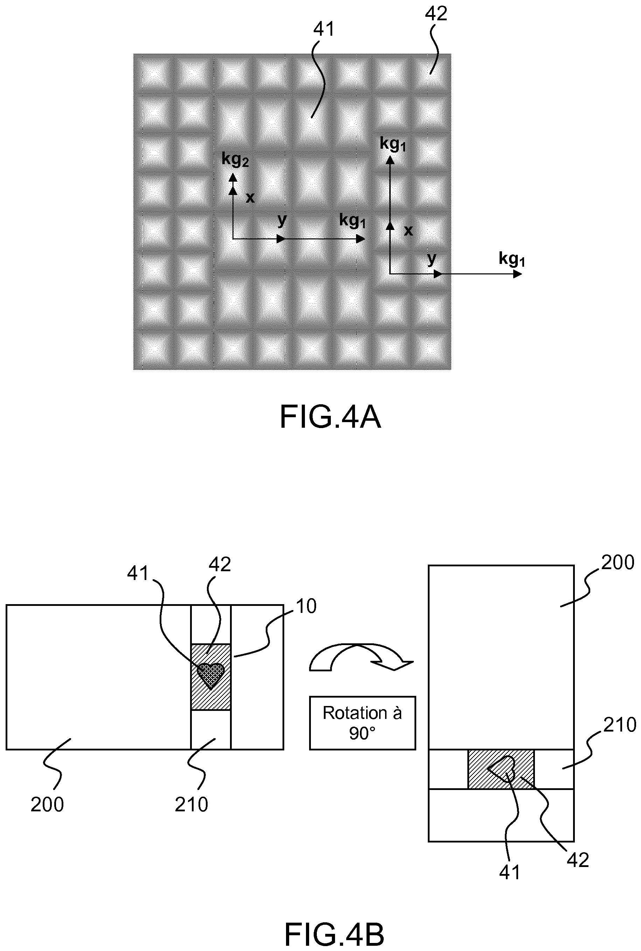

Les figures 4A et 4B illustrent un second exemple similaire à celui des figures 3A et 3B, avec notamment un premier réseau 41 présentant un premier et un second vecteurs réseaux de directions perpendiculaires et de normes $k_{g1}$ et $k_{g2}$ respectivement, mais dans lequel le second réseau 42 présente un pas identique selon chacune des directions, ce pas étant identique au pas du réseau 41 selon une direction. Autrement dit dans cet exemple, le vecteur réseau du réseau 42 selon une direction (dans cet exemple $\mathbf{k_{g1}}$) est égal à l'un des vecteurs réseaux du réseau 41 tandis que l'autre vecteur réseau de direction perpendiculaire présente la même norme. Un tel composant optique de sécurité présente les effets optiques remarquables suivants, illustrés sur la figure 4B. Lorsqu'il est observé selon une première direction correspondant à un azimut nul par rapport au vecteur réseau $\mathbf{k_{g2}}$ du réseau 41, un observateur verra la zone correspondant audit premier réseau avec une première couleur et la zone complémentaire 42 dans une couleur différente, la direction d'observation correspondant à un azimut nul par rapport au vecteur réseau $\mathbf{k_{g1}}$ du réseau 42. Lorsqu'une rotation azimutale de 90° du document 200 dans lequel est agencé le composant optique de sécurité 10 est effectuée (voir figure 4B), la nouvelle direction d'observation correspondra à un azimut nul par rapport au vecteur réseau $\mathbf{k_{g1}}$ du réseau 41 et par rapport au vecteur réseau $\mathbf{k_{g1}}$ du réseau 42. Il y aura donc disparition du motif formé par le réseau 42, l'observateur ne voyant plus qu'une seule couleur.

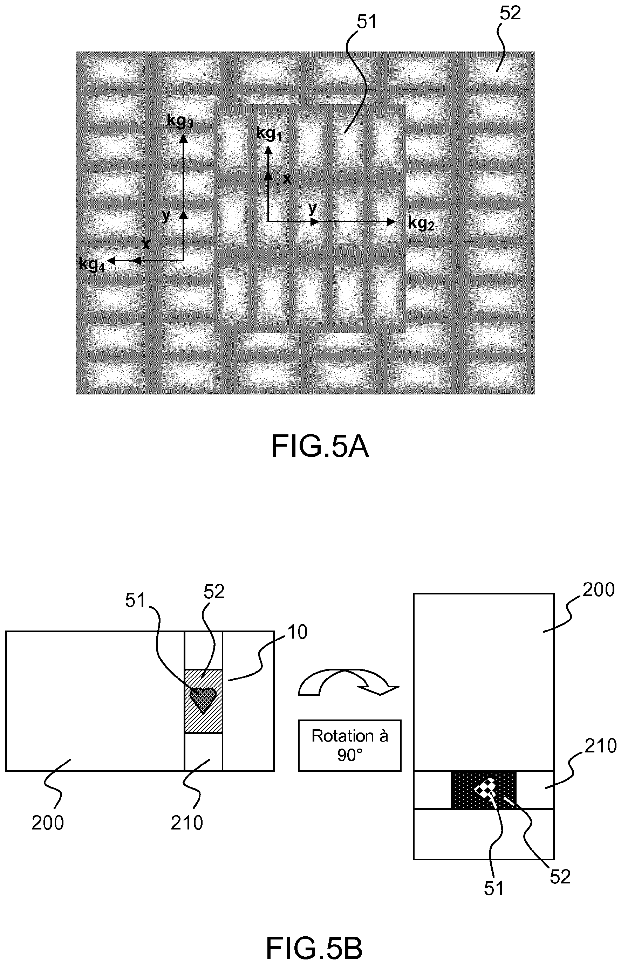

Les figures 5A et 5B illustrent un troisième exemple similaire à celui des figures 3A et 3B, avec notamment un premier réseau 51 présentant un premier et un second vecteur réseau $\mathbf{k_{g1}}$ et $\mathbf{k_{g2}}$ de directions parallèles respectivement à celles des vecteurs réseaux $\mathbf{k_{g3}}$ et $\mathbf{k_{g4}}$ du deuxième réseau 52 mais de normes différentes. Un tel composant optique de sécurité présente les effets optiques remarquables suivants, illustrés sur la figure 5B. Lorsqu'il est observé selon une première direction correspondant à un azimut nul par rapport au vecteur réseau $\mathbf{k_{g1}}$ du réseau 51, un observateur verra la zone correspondant audit premier réseau avec une première couleur et la zone complémentaire 52 dans une couleur différente, la direction d'observation correspondant à un azimut nul par rapport au vecteur réseau $\mathbf{k_{g4}}$ du réseau 52. Lorsqu'une rotation azimutale de 90° du document 200 dans lequel est agencé le composant optique de sécurité 10 est effectuée (voir figure 5B), la nouvelle direction d'observation correspondra à un azimut nul par rapport au vecteur réseau $\mathbf{k_{g2}}$ du réseau 51 et par rapport au vecteur réseau $\mathbf{k_{g3}}$ du réseau 52. Il y aura donc changement des couleurs à la fois du motif formé par la zone 51 et du fond formé pare la zone 52.

Dans le quatrième exemple illustré sur les figures 6A et 6B, les deux réseaux bidimensionnels 61 et 62, symétriques, présentent chacun des pas identiques selon les deux directions. Autrement dit, les vecteurs réseaux pour chacun des réseaux présentent des directions perpendiculaires mais des normes identiques. Dans cet exemple, le réseau 61 présente ainsi selon chaque direction un vecteur réseau de norme $k_{g1}$ et le réseau 62 présente selon chaque direction un vecteur réseau de norme $k_{g2}$. Un tel composant optique de sécurité présente les effets optiques remarquables suivants, illustrés sur la figure 6B. Lorsqu'il est observé selon une première incidence correspondant à une position axiale donnée du document par rapport à un observateur, l'observateur verra la zone 61 avec une première couleur et la zone complémentaire 62 dans une couleur différente. Lorsqu'une translation axiale du document 200 dans lequel est agencé le composant optique de sécurité 10 est effectuée (voir figure 6B), la nouvelle position correspondra à un angle d'incidence différent. Il y aura donc changement des couleurs à la fois du motif formé par la zone 61 et du fond formé pare la zone 62.

Les composants de sécurité tels que décrits précédemment peuvent être réalisés de la façon suivante. Les structures optiques (ondulations) des différentes zones sont enregistrées par photolithographie ou lithographie par faisceau d'électrons sur un support photosensible ou « photorésist » selon l'expression anglo-saxonne. Une étape de galvanoplastie permet de reporter ces structures optiques dans un matériau résistant par exemple à base de Nickel pour réaliser la matrice ou « master ». Un estampage est réalisé à partir de la matrice pour transférer la microstructure sur un film et structurer la couche en matériau diélectrique 101 (figure 1A), typiquement un vernis d'estampage de quelques microns d'épaisseur porté par un film de 12 $\mu$m à 50 $\mu$m en matériau polymère, par exemple en PET (polyéthylène téréphtalate). L'estampage peut être fait par pressage à chaud du matériau diélectrique (« hot embossing ») ou par moulage puis réticulation («UV casting »). L'indice de réfraction de la couche formée du vernis d'estampage est typiquement de 1,58. Vient ensuite la métallisation de la couche ainsi embossée. La métallisation est faite sous vide, avec l'un par exemple des métaux suivants : argent, aluminium, or, chrome, cuivre. Une couche de fermeture est ensuite appliquée, par exemple par un procédé d'enduction. Pour certaines applications, telles que les produits de laminage ou de marquage à chaud, cette couche peut être la couche adhésive. La couche de fermeture, qui forme la couche 103 (figure 1A) présente typiquement une épaisseur comprise entre let 5 $\mu$m pour une couche de fermeture simple et entre 2 et 70 $\mu$m pour une couche de fermeture jouant le rôle de couche adhésive. Selon la destination finale du produit, un adhésif peut être appliqué sur la couche de fermeture. Selon une variante, une couche de détachement (par exemple une cire) peut être appliquée entre le vernis d'estampage 101 et le film support en PET. On transfert l'élément de sécurité sur le document en pressant à chaud l'élément de sécurité sur le document, le composant plasmonique se trouvant face au document. Pendant le transfert, le film adhésif colle sur le document et la couche de détachement ainsi que le film support sont retirés.

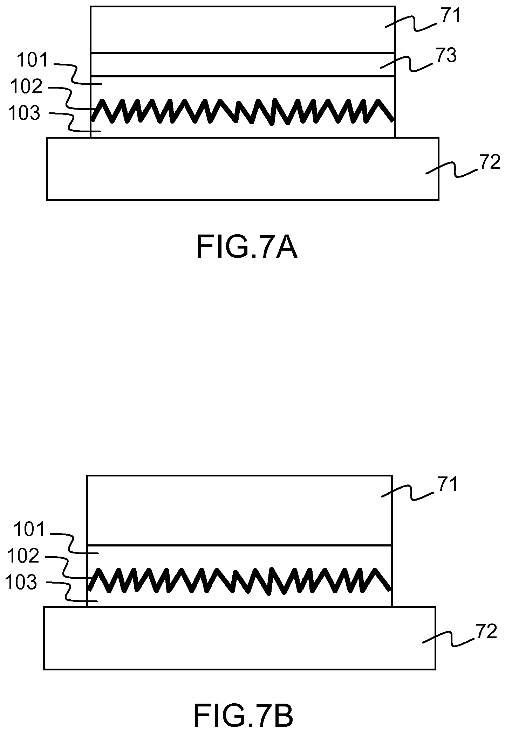

Les figures 7A et 7B représentent ainsi de façon schématique une vue en coupe (partielle) de composants ainsi obtenus selon deux exemples de réalisation, ces composants étant destinés à être collés sur un substrat 72.

Dans l'exemple de la figure 7A, le composant optique de sécurité comprend la couche métallique structurée 102 formant avec la couche transparente 101 en matériau diélectrique une interface métal - diélectrique. Il comprend en outre une couche de fermeture 103 en contact avec la couche métallique 102, - dans cet exemple la couche de fermeture est la couche en adhésif thermo-réactivable, et un film support 71, par exemple en PET, de quelques dizaines de microns d'épaisseur, typiquement entre 10 $\mu$m et 40 $\mu$m par exemple. Il comprend en outre une couche de détachement 73 entre la couche support 71 et la couche en matériau diélectrique 101 permettant de retirer au moment du transfert à chaud les couches support 71 et de détachement 73. Un tel composant optique de sécurité est particulièrement bien adapté à la sécurisation d'un document comprenant un substrat 72 de type papier.

Dans l'exemple de la figure 7B, le composant optique de sécurité est du type « étiquette ». Il comprend les mêmes couches que celui représenté en figure 7A mais dans cet exemple, la couche de fermeture 103 est une couche en adhésif permanent, et il n'y a donc plus de couche de détachement. Le film support 71, par exemple en PET, est légèrement plus épais, typiquement entre 10 $\mu$m et 50 $\mu$m. Ce composant est par exemple adapté pour être collé sur un substrat de type packaging.

Selon une variante, il est possible au moment de l'étape de métallisation d'appliquer plusieurs métaux différents, par exemple pour rechercher des effets visuels différents. Pour cela, on pourra par exemple appliquer avec un motif donné une encre soluble sur la couche embossée. Lors de la métallisation avec le premier métal, celui-ci est appliqué uniformément sur la couche mais ne subsiste que sur les zones où ne se trouve pas l'encre lorsque l'encre est retirée. Ensuite une deuxième métallisation sélective est réalisée comprenant également une étape d'impression préalable d'encre soluble permettant de sélectionner les zones d'application du deuxième métal.

Selon une variante, les zones métalliques différentes peuvent correspondre à des réseaux différents. Autrement dit, le premier métal est appliqué sur une ou plusieurs première(s) zone(s) de couplage correspondant à un ou plusieurs des dits réseaux à deux dimensions, tandis que le deuxième métal est appliqué sur une ou plusieurs autre(s) deuxième(s) zones de couplage correspondant à un ou plusieurs autres réseaux à deux dimensions, permettant dans les différentes zones de couplage des effets colorés distincts. Alternativement, les différents métaux peuvent être déposés selon des zones qui ne correspondent pas aux différents réseaux.

Comme cela apparaît au vue de l'exemple de méthode de fabrication décrite ci-dessus, l'inclusion d'un composant optique de sécurité selon l'invention dans un document sécurisé est parfaitement compatible avec la présence dans le même document de structures à base de réseaux habituellement utilisées pour la réalisation de composants holographiques.

Notamment, il sera possible de réaliser un élément optique de sécurité comprenant un ou plusieurs composants de type plasmonique tels que décrits précédemment avec éventuellement un ou plusieurs autres type de composants optiques de sécurité, par exemple de type holographique et par exemple de type DOVID.

Pour cela une matrice pourra être réalisée par enregistrement des différents motifs correspondants aux différents composants optiques de sécurité sur le support photorésist puis galvanoplastie. L'estampage peut ensuite être réalisé à partir de la matrice pour transférer les différentes micro structures sur le film en matériau polymère, destiné à l'embossage. La métallisation pour les composants à effet plasmonique pourra être faite sur l'ensemble du film, car elle ne gênera pas les autres composants de type DOVID fonctionnant également en réflexion. Selon une variante le métal est déposé sélectivement sur chacun du ou desdits composants optiques de sécurité à effet plasmonique, laissant apparaître des zones non métallisées sur l'élément optique de sécurité. Cela permet par exemple de mettre davantage en évidence les effets optiques desdits composants et/ou de faire apparaître le substrat du document ou de l'objet à sécuriser sous forme de motifs non métallisés. La métallisation sélective peut être obtenue par une première étape de dépôt d'une couche métallique sur l'ensemble du film structuré puis par démétallisation partielle pour former lesdites zones non métallisées.

Le document sécurisé ainsi obtenu est très facilement contrôlable par un utilisateur peu expérimenté, et avec une grande fiabilité. Comme on l'a montré, le composant optique de sécurité de type plasmonique réalisé selon l'invention pourra se présenter comme un film de sécurité dont les caractéristiques peuvent être contrôlées à l'oeil dans le visible. Une authentification visuelle du document sécurisé est donc possible, y compris en lumière naturelle. Cette authentification, basée sur des effets visuels en réflexion différents selon l'axe de rotation du composant et/ou en translation, est particulièrement facile à réaliser.

En pratique, un observateur pourra contrôler le document sécurisé en observant en réflexion directe le composant de type plasmonique devant une source de lumière blanche.

Bien que décrite à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité (10) destiné à être observé à l'oeil nu dans une bande spectrale comprise entre 380 et 780 nm et en réflexion directe, comprenant :

   - une couche en matériau diélectrique (101), transparente dans ladite bande spectrale d'observation,
   - une couche métallique (102) continue formant avec ladite couche en matériau diélectrique une interface métal - diélectrique, présentant une épaisseur (t) suffisante pour permettre la réflexion de la lumière incidente sur ladite interface dans la bande spectrale d'observation avec une transmission maximale résiduelle en fonction de la longueur d'onde de 2%, et structurée au niveau de ladite interface pour former, dans une première zone de couplage, deux ensembles d'ondulations de profil sinusoïdal ou quasi-sinusoïdal, s'étendant selon deux directions et formant un premier réseau de couplage à deux dimensions, de périodes ($\Lambda_1$, $\Lambda_2$) sub-longueur d'onde selon chacune des directions,

   **caractérisé en ce que** la profondeur du premier réseau de couplage à deux dimensions est comprise entre 10% et 50% desdites périodes, et **en ce que**
   les périodes selon chacune des directions sont déterminées pour optimiser le couplage d'une onde lumineuse incidente à au moins une première longueur d'onde comprise dans la bande spectrale d'observation avec un mode plasmonique se propageant à l'interface métal - diélectrique.

2. Composant optique de sécurité selon la revendication 1, dans lequel le premier réseau de couplage est défini par deux vecteurs réseaux, de directions perpendiculaires.

3. Composant optique selon la revendication 2, dans lequel les normes des vecteurs réseaux sont différentes.

4. Composant optique selon la revendication 2, dans lequel les normes des vecteurs réseaux sont identiques.

5. Composant optique selon l'une quelconque des revendications précédentes, dans lequel ladite couche métallique est structurée pour former dans une deuxième zone de couplage distincte de la première zone de couplage, deux ensembles d'ondulations s'étendant selon deux directions et formant un deuxième réseau de couplage (32, 42, 52, 62) à deux dimensions, de périodes sub-longueur d'onde selon chacune des directions.

6. Composant optique de sécurité selon la revendication 5, dans lequel lesdites première et deuxième zones de couplage forment des motifs complémentaires.

7. Composant optique de sécurité selon l'une quelconque des revendications 5 ou 6, dans lequel la période selon une direction d'un premier réseau est identique à la période selon l'autre direction du deuxième réseau.

8. Composant optique de sécurité selon l'une quelconque des revendications 5 ou 6, dans lequel les périodes selon la première et la seconde direction du premier réseau sont identiques et la période selon une direction du deuxième réseau est identique à ladite période du premier réseau.

9. Composant optique de sécurité selon l'une quelconque des revendications précédentes, dans lequel une partie au moins de la couche métallique est formée en aluminium et son épaisseur est supérieure à 30 nm.

**10.** Composant optique de sécurité selon l'une quelconque des revendications précédentes, dans lequel la couche métallique comprend au moins deux parties formées chacune d'un métal différent.

**11.** Composant optique de sécurité selon l'une quelconque des revendications précédentes, comprenant en outre une couche de fermeture (103) en contact avec ladite couche métallique sur sa face opposée à ladite interface métal - diélectrique.

**12.** Elément optique de sécurité (210) destiné à la sécurisation d'un document ou d'un objet (200) et comprenant au moins un composant optique de sécurité selon l'une des revendications précédentes.

**13.** Elément de sécurité selon la revendication 12 comprenant en outre une ou plusieurs zones non métallisées.

**14.** Document ou produit sécurisé (200) comprenant un substrat (72) et un élément optique de sécurité selon l'une quelconques des revendications 12 ou 13, fixé sur ledit substrat.

**15.** Méthode de fabrication d'un composant optique de sécurité destiné à être observé à l'oeil nu dans une bande spectrale comprise entre 380 et 780 nm et en réflexion directe, ladite méthode comprenant :

- la provision d'une couche (101) en matériau diélectrique, transparente dans ladite bande spectrale d'observation, et la structuration de ladite couche en matériau diélectrique pour former, dans une première zone de couplage, deux ensembles d'ondulations de profil sinusoïdal ou quasi-sinusoïdal, s'étendant selon deux directions et formant un premier réseau de couplage à deux dimensions, de périodes sub-longueur d'onde selon chacune des directions, de profondeur comprise entre 10% et 50% desdites périodes,
- le dépôt d'une couche métallique (102) continue sur ladite couche en matériau diélectrique pour former avec ladite couche en matériau diélectrique une interface métal - diélectrique structurée, ladite couche métallique présentant une épaisseur suffisante pour permettre la réflexion de la lumière incidente sur ladite interface dans la bande spectrale d'observation avec une transmission maximale résiduelle en fonction de la longueur d'onde de 2%, les périodes selon chacune des directions étant déterminer pour optimiser le couplage d'une onde lumineuse incidente à au moins une première longueur d'onde comprise dans la bande spectrale d'observation avec un mode plasmonique se propageant à l'interface métal - diélectrique.

**16.** Méthode selon la revendication 15, dans laquelle ladite couche métallique est recouverte sur sa face opposée à ladite interface métal - diélectrique structurée par une couche de fermeture (103).

**Patentansprüche**

**1.** Optische Sicherheitskomponente (10), welche geeignet ist, mit dem bloßen Auge in einem Spektralbereich zwischen 380 und 780 nm und bei direkter Reflexion beobachtet zu werden, umfassend:

- eine Schicht aus dielektrischem Material (101), die in dem Beobachtungsspektralbereich transparent ist,
- eine ununterbrochene Metallschicht (102), welche mit der Schicht aus dielektrischem Material eine Metall-Dielektrikum-Grenzfläche bildet, eine Dicke (t) aufweist, die ausreicht, um die Reflexion von auf die Grenzfläche einfallendem Licht im Beobachtungsspektralbereich mit einer maximalen Resttransmission als Funktion der Wellenlänge von 2% zu ermöglichen, und an der Grenzfläche so strukturiert ist, dass in einer ersten Koppelzone zwei Sätze von Wellen mit sinusförmigem oder quasi-sinusförmigem Profil gebildet sind, die sich in zwei Richtungen erstrecken und ein erstes zweidimensionales Koppelgitter mit Unterwellenlängen-Perioden ($\Lambda_1$, $\Lambda_2$) in jeder der Richtungen bilden,
**dadurch gekennzeichnet, dass**
die Tiefe des ersten zweidimensionalen Koppelgitters zwischen 10% und 50% der Perioden beträgt,
die Perioden in jeder der Richtungen so bestimmt sind, dass die Kopplung einer einfallenden Lichtwelle mit mindestens einer ersten, in dem Beobachtungsspektralbereich enthaltenen Wellenlänge mit einer sich an der Metall-Dielektrikum-Grenzfläche ausbreitenden Plasmonmode optimiert ist.

**2.** Optische Sicherheitskomponente nach Anspruch 1, wobei das erste Koppelgitter durch zwei Gittervektoren in zueinander senkrechten Richtungen definiert ist.

**3.** Optische Sicherheitskomponente nach Anspruch 2, wobei die Längen der Gittervektoren verschieden sind.

4. Optische Sicherheitskomponente nach Anspruch 2, wobei die Längen der Gittervektoren gleich sind.

5. Optische Sicherheitskomponente nach einem der voranstehenden Ansprüche, wobei die Metallschicht so strukturiert ist, dass in einer zweiten Koppelzone, die von der ersten Koppelzone verschieden ist, zwei Sätze von Wellen gebildet sind, die sich in zwei Richtungen erstrecken und ein zweites zweidimensionales Koppelgitter (32, 42, 52, 62) mit Unterwellenlängen-Perioden in jeder der Richtungen bilden.

6. Optische Sicherheitskomponente nach Anspruch 5, wobei die erste und zweite Koppelzone komplementäre Muster bilden.

7. Optische Sicherheitskomponente nach Anspruch 5 oder 6, wobei die Periode in einer Richtung des ersten Gitters gleich der Periode in einer anderen Richtung des zweiten Gitters ist.

8. Optische Sicherheitskomponente nach Anspruch 5 oder 6, wobei die Perioden in der ersten und der zweiten Richtung des ersten Gitters gleich sind und die Periode in einer Richtung des zweiten Gitters gleich der Periode des ersten Gitters ist.

9. Optische Sicherheitskomponente nach einem der voranstehenden Ansprüche, wobei wenigstens ein Teil der Metallschicht aus Aluminium gebildet ist und dessen Dicke größer als 30 nm ist.

10. Optische Sicherheitskomponente nach einem der voranstehenden Ansprüche, wobei die Metallschicht mindestens zwei Teile umfasst, die jeweils aus einem anderen Metall gebildet sind.

11. Optische Sicherheitskomponente nach einem der voranstehenden Ansprüche, ferner umfassend eine Deckschicht (103), welche mit der Metallschicht an deren Seite in Kontakt ist, die der Metall-Dielektrikum-Grenzfläche gegenüber liegt.

12. Optisches Sicherheitselement (210), welches zur Sicherung eines Dokuments oder eines Objekts (200) geeignet ist und mindestens eine optische Sicherheitskomponente nach einem der voranstehenden Ansprüche umfasst.

13. Optisches Sicherheitselement nach Anspruch 12, ferner umfassend eine oder mehrere nicht-metallische Zonen.

14. Gesichertes Dokument oder Objekt (200), welches ein Substrat (72) und ein optisches Sicherheitselement nach einem der Ansprüche 12 oder 13, welches auf dem Substrat befestigt ist, umfasst.

15. Verfahren zur Herstellung einer optische Sicherheitskomponente, welche geeignet ist, mit dem bloßen Auge in einem Spektralbereich zwischen 380 und 780 nm und bei direkter Reflexion beobachtet zu werden, wobei das Verfahren umfasst:

   - die Bereitstellung einer Schicht (101) aus dielektrischem Material, die in dem Beobachtungsspektralbereich transparent ist, und die Strukturierung der Schicht aus dielektrischem Material so, dass in einer ersten Koppelzone zwei Sätze von Wellen mit sinusförmigem oder quasi-sinusförmigem Profil gebildet werden, die sich in zwei Richtungen erstrecken und ein erstes zweidimensionales Koppelgitter mit Unterwellenlängen-Perioden in jeder der Richtungen bilden, wobei die Tiefe zwischen 10% und 50% der Perioden beträgt,
   - das Ablegen einer ununterbrochenen Metallschicht (102) auf die Schicht aus dielektrischem Material, um mit der Schicht aus dielektrischem Material eine strukturierte Metall-Dielektrikum-Grenzfläche zu bilden, wobei die Metallschicht eine Dicke aufweist, die ausreicht, um die Reflexion von auf die Grenzfläche einfallendem Licht im Beobachtungsspektralbereich mit einer maximalen Resttransmission als Funktion der Wellenlänge von 2% zu ermöglichen, wobei die Perioden in jeder der Richtungen so bestimmt sind, dass die Kopplung einer einfallenden Lichtwelle mit mindestens einer ersten, in dem Beobachtungsspektralbereich enthaltenen Wellenlänge mit einer sich an der Metall-Dielektrikum-Grenzfläche ausbreitenden Plasmonmode optimiert ist.

16. Verfahren nach Anspruch 15, wobei die Metallschicht an seiner Seite, die der strukturierten Metall-Dielektrikum-Grenzfläche gegenüberliegt, von einer Deckschicht (103) bedeckt wird.

**Claims**

1. An optical security component (10) intended to be observed by the naked eye in a spectral band between 380 and 780 nm and in direct reflection mode, comprising:

   - a layer of dielectric material (101), transparent in said observation spectral band,
   - a continuous metallic layer (102) forming, with said layer of dielectric material, a metal-dielectric interface, having a sufficient thickness (t) to allow the reflection of the incident light on said interface in the observation spectral band with a maximum residual transmission as a function of the wavelength of 2%, and structured at said interface to form, in a first coupling area, two sets of undulations having a sinusoidal or quasi-sinusoidal profile, extending in two directions and forming a first coupling grating with two dimensions, of subwavelength periods ($\Lambda_1$, $\Lambda_2$) in each of the directions;

   **characterized in that** the depth of said first coupling grating is between 10% and 50% of said periods, and **in that** the periods in each of said two directions are determined to optimize the coupling of an incident light wave of at least a first wavelength contained in the observation spectral band with a plasmonic mode that is propagated on the metal-dielectric interface.

2. The optical security component as claimed in claim 1, in which the first coupling grating is defined by two grating vectors, with directions at right angles to one another.

3. The optical component as claimed in claim 2, in which the norms of the grating vectors are different.

4. The optical component as claimed in claim 2, in which the norms of the grating vectors are identical.

5. The optical component as claimed in any one of the preceding claims, in which said metallic layer is structured to form, in a second coupling area distinct from the first coupling area, two sets of undulations extending in two directions and forming a second coupling grating (32, 42, 52, 62) with two dimensions, of subwavelength periods in each of the directions.

6. The optical security component as claimed in claim 5, in which said first and second coupling areas form complementary patterns.

7. The optical security component as claimed in either one of claims 5 and 6, in which the period in one direction of a first grating is identical to the period in the other direction of the second grating.

8. The optical security component as claimed in either one of claims 5 and 6, in which the periods in the first and the second directions of the first grating are identical and the period in one direction of the second grating is identical to said period of the first grating.

9. The optical security component as claimed in any one of the preceding claims, in which at least a part of the metallic layer is formed in aluminum and its thickness is greater than 30 nm.

10. The optical security component as claimed in any one of the preceding claims, in which the metallic layer comprises at least two parts each formed by a different metal.

11. The optical security component as claimed in any one of the preceding claims, also comprising a coverlayer (103) in contact with said metallic layer on its face opposite said metal-dielectric interface.

12. An optical security element (210) intended to secure a document or an object (200) and comprising at least one optical security component as claimed in one of the preceding claims.

13. The security element as claimed in claim 12, also comprising one or more non-metalized areas.

14. A secured document or product (200) comprising a substrate (72) and an optical security element as claimed in either one of claims 12 and 13, fixed onto said substrate.

15. A method for fabricating an optical security component intended to be observed by the naked eye in a spectral band between 380 and 780 nm and in direct reflection mode, said method comprising:

- the provision of a layer (101) of dielectric material, transparent in said observation spectral band, and the structuring of said layer of dielectric material to form, in a first coupling area, two sets of undulations having a sinusoidal or quasi-sinusoidal profile, extending in two directions and forming a first coupling grating with two dimensions, of subwavelength periods in each of the directions, and whose depth is between 10% and 50% of said periods,
- the deposition of a continuous metallic layer (102) on said layer of dielectric material to form, with said layer of dielectric material, a structured metal-dielectric interface, said metallic layer having a sufficient thickness to allow the reflection of the incident light on said interface in the observation spectral band with a maximum residual transmission as a function of the wavelength of 2%, the periods in each of said two directions being determined to optimize the coupling of an incident light wave of at least a first wavelength contained in the observation spectral band with a plasmonic mode that is propagated on the metal-dielectric interface.

16. The method as claimed in claim 15, in which said metallic layer is covered on its face opposite said structured metal-dielectric interface by a coverlayer (103).

FIG.1A

FIG.1B

FIG.2A

FIG.2B

FIG.3A

FIG.3B

FIG.4A

Rotation à
90°

FIG.4B

FIG.5A

FIG.5B

FIG.6A

FIG.6B

FIG.7A

FIG.7B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2509873
- DE 102007061979
- US 7145723 B2

**Littérature non-brevet citée dans la description**

- **W.R. THOMPKIN et al.** Zero-order Gratings for Optically Variable Devices. *Proceedings of SPIE,* 2002, vol. 4677